# EUROPÄISCHE PATENTSCHRIFT

(11) **EP 0 800 740 B1**
(45) Veröffentlichungstag und Bekanntmachung des Hinweises auf die Patenterteilung: **02.09.1998**
(21) Anmeldenummer: 96924808.7
(22) Anmeldetag: 28.06.1996
(51) Int. Cl.: H04M 11/04

(54) **VERFAHREN ZUM ÜBERWACHEN EINES OBJEKTES ÜBER EIN DIGITALES DATENNETZ**
PROCESS FOR MONITORING AN OBJECT USING A DIGITAL DATA NETWORK
PROCEDE PERMETTANT DE SURVEILLER UN OBJET PAR L'INTERMEDIAIRE D'UN RESEAU NUMERIQUE DE DONNEES

(30) Priorität: 30.06.1995 DE 19523980
(43) Veröffentlichungstag der Anmeldung: 15.10.1997
(73) Patentinhaber: Hellemann, Hans-Peter, 81737 München (DE)
(72) Erfinder: Hellemann, Hans-Peter, 81737 München (DE)
(74) Vertreter: Schoppe, Fritz, Dipl.-Ing.
(86) Internationale Anmeldenummer: EP9602837
(87) Internationale Veröffentlichungsnummer: WO9702694

(56) Entgegenhaltungen:
- EP-A- 0 573 214
- PATENT ABSTRACTS OF JAPAN vol. 95, no. 003 & JP,A,07 072923 (MITSUBISHI ELECTRIC CORP), 17.März 1995,
- FUNKSCHAU, Bd. 64, Nr. 21, 2.Oktober 1992, Seiten 22-24, 26, 28 - 29, XP000319853 "SECURITY '92"
- ANNUAL REVIEW OF COMMUNICATIONS, Bd. 48, 1.Januar 1994, Seiten 599-602, XP000543209 WUNNAVA V SUBBARAO ET AL: "DEVELOPMENT OF A SECURITY NETWORK (SECNET) BASED ON ISDN"
- FUNKSCHAU, Juli 1987, MUNCHEN DE, Seiten 48-50, XP002018448 K.-L. PLANK: "ALARM IM D-KANAL" in der Anmeldung erwähnt

## Beschreibung

Die vorliegende Erfindung betrifft ein Verfahren zum Überwachen eines Objektes mit einer dem Objekt zugeordneten dezentralen Alarmerfassungseinheit und mit einer Alarmzentrale, welche über ein digitales Datennetz miteinander verbindbar sind.

Zum Überwachen von Objekten sind bereits automatische Alarmerfassungssysteme mit einer dezentralen Alarmerfassungseinheit in Form eines sogenannten automatischen Wähl- und Ansage-Gefahrenmelders gemäß der Norm VDE 0820 und mit einer Alarmzentrale bekannt. Derartige automatische Wähl- und Ansage-Gefahrenmelder sind objektseitig mit diversen Überwachungskontakten oder Meldekontakten für die Erfassung zugeordneter Alarme verbunden und sind direkt an das öffentliche Telefonnetz angeschlossen.

Ferner gibt es Alarmerfassungssysteme, deren dezentrale Alarmerfassungseinheiten über Standleitungsverbindungen mit einer zentralen Alarmanlage verbunden sind.

Bei den erstgenannten Systemen mit den sogenannten automatischen Wähl- und Ansage-Gefahrenmeldern wählen diese objektseitigen Alarmerfassungseinheiten im Falle eines Alarms eine eingespeicherte Nummer und melden nach Zustandekommen der Wählverbindung an die Alarmzentrale dem Wachpersonal am Ort der Alarmzentrale einen eingespeicherten Text, der beispielsweise den Ort des Alarms kennt. Gelingt einem automatischen Wähl- und Ansage-Gefahrenmelder neuerer Bauart auch nach mehreren Versuchen kein Verbindungsaufbau zu der Alarmzentrale, so wählt der Gefahrenmelder eine Alternativnummer, um einen Versuch der Durchführung der gleichen Prozedur zu unternehmen.

Schon aufgrund der langen Wählzeiten für mehrere Versuche ist diese Form des Verbindungsaufbaus für Objekte, die als schützenswert eingestuft werden, inakzeptabel. Aus diesem Grund werden automatische Wähl- und Ansage-Gefahrenmelder vom Verband der Sachversicherer nur für Objekte geringer Gefahrenklasse akzeptiert.

Die Bedeutung der sofortigen Alarmübermittlung wird besonders deutlich in Anbetracht der Tatsache, daß in einer Großstadt die mittlere Fahrzeit des Wachpersonals oder der Polizei zu einem Einsatzort bei lediglich etwa drei Minuten liegt, so daß Zeiten für die Herstellung einer Verbindung bei derartigen automatischen Wähl- und Ansage-Gefahrenmeldern erheblich ins Gewicht fallen.

Andererseits führt die Verwendung einer Standleitungsverbindung, die ein solches Manko nicht aufweist, entweder bei hohen, durch die Standleitungsverbindung zu überbrückenden Entfernungen zu untragbar hohen Leitungskosten, oder es erhöht sich drastisch die Anzahl der nötigen Alarmzentralen für eine flächendeckende Überwachung.

Aus Funkschau 7/1987, Seiten 48 bis 50 ist es bereits bekannt, Alarmmeldungen, wie beispielsweise Gefahrenmeldungen, über den D-Kanal des ISDN-Netzes zu übertragen. Die dort beschriebene Technik sieht vor, den D-Kanal, der an sich zum Verbindungsaufbau innerhalb des ISDN-Netzes vorgesehen ist, zur Übertragung von Alarmmeldungen zu benutzen, ohne daß es hierbei beabsichtigt ist, eine Verbindung zwischen einer Zentrale und einer dezentralen Alarmerfassungseinheit über den Daten-/Nachrichten-Kanal (B-Kanal) aufzubauen. Eine derartige Nutzung des D-Kanals des ISDN-Netzes ist ohne spezielle postalische Genehmigung unzulässig.

Allgemein wird eine ISDN-Verbindung durch einen Austausch von Informationspaketen zwischen dem anrufenden Teilnehmer und dem ISDN-Netz sowie zwischen dem ISDN-Netz und dem Adressaten bzw. angerufenen Teilnehmer aufgebaut. Diese Informationspakete sind in internationalen Standards, wie beispielsweise der ITU (CCITT)-Schrift Q. 930-Q.940 "Digital Subscriber Signalling" festgelegt. Diese Standards beschreiben die einzelnen Datenpakete sowie deren Nutzungsmöglichkeit. Bei einem Verbindungsaufbau über das ISDN-Netz beginnt jeder Dialog mit einem "set up"-Paket, welches neben einigen Feldern mit festgelegten Dateninhalt auch noch solche enthält, die optional verwendet werden können. Das wesentlichste und vom Telefonieren her bekannteste Feld ist das Feld "Calling Party Number", welches den Nutzern von ISDN-Telefonen durch die Funktion "Rufnummer unterdrücken" und durch die Funktion "Anruf auflisten" bei privaten Nebenstellenalagen bekannt ist. Dieses "set up"-Paket wird vom Netzwerk, also beispielsweise der Telekom, an die im "set up"-Paket angegebene Rufnummer übertragen. Der Empfänger erhält mit dem ersten ankommenden Signalisierungspaket die Information über die Art des Anrufs und, soweit das diesbezügliche Feld gefüllt ist, auch die Information über die anrufende Person.

Die EP-A2-0573214 betrifft ein Verfahren zum Übermitteln eines Alarmes über das ISDN-Netz, bei dem nach Wahl einer vorgegebenen Notrufnummer, die dort beispielshaft als die Nummer 911 angegeben ist, eine Sprechverbindung über den Nachrichtenkanal oder D-Kanal des ISDN-Netzes zwischen der Person, die den Alarm melden möchte, und der Person, die in einer Zentrale den Alarm entgegennimmt, aufgebaut werden soll. Gleichzeitig mit dem Aufbau dieser Verbindung werden der Bedienungsperson der Alarmzentrale unter Verwendung der Rufnummer (calling party number) des Endgeräts, vom dem aus der Alarm gemeldet wird, zu diesem Endgerät gehörige Daten, wie beispielsweise die Raumnummer oder der Gebäudeort des die Alarmnachricht übermittelnde Telefons durch auslesen einer Datenbank zugeführt. In diesem Zusammenhang wird der Nachrichtenkanal von der Zentrale zu der alarmgebenden Telefoneinheit aufgebaut, damit die Person, die die zentrale Alarmnummer gewählt hat, ihre Alarmnachricht übermitteln kann. Dieses bekannte System ist darauf ausgerichtet, sämtliche durch Wahl einer Alarmnummer ausgelösten Alarmanrufe zu einer Zentrale, die momentan frei ist, durchzuschalten. Ferner ist dieses System darauf abgestellt, durch Sprachkommunikation zwischen der den Alarm meldenden Person und der Bedienungsperson der Zentrale die Alarmnachricht weiterzuleiten. Demzufolge ist das bekannte Verfahren zwingend darauf abgestellt, eine Sprachkommunikation über den Datenkanal bzw. Nutzkanal (B-Kanal) zu etablieren.

Ausgehend von diesem Stand der Technik liegt der vorliegenden Erfindung die Aufgabe zugrunde, ein Verfahren zum Überwachen eines Objektes mit einer dem Objekt zugeordneten dezentralen Alarmerfassungseinheit und mit einer Alarmzentrale derart weiterzubilden, daß eine sichere und schnelle Übertragung der Alarminformation im Alarmfall ermöglicht wird, ohne daß es einer Standleitung zwischen der Alarmerfassungseinheit und der Alarmzentrale bedarf.

Diese Aufgabe wird durch ein Verfahren gemäß Patentanspruch 1 gelöst.

Bei dem erfindungsgemäßen Verfahren wird eine über den Signalisierungskanal übertragene Information, welche die dezentrale Alarmerfassungseinheit eindeutig identifiziert, und welche durch die Rufnummer der Alarmerfassungseinheit (Calling Party Number) gebildet ist, als alarmauslösende Information für die Zentrale verwendet, so daß die Alarmauslösung bereits vor dem Zustandekommen einer Verbindung mit der Notwendigkeit des Zugriffs auf den Nachrichten-/Daten-Kanal bzw. B-Kanal erfolgt. Die im D-Kanal übertragene Rufnummer der Alarmerfassungseinheit (Calling Party Number) dient als Alarminformation. Die übertragene Rufnummer stellt ein eindeutiges Kriterium zum Identifizieren der dezentralen Alarmerfassungseinheit dar, welche keine zusätzliche Schlüsselung benötigt, da ISDN-Verbindungen wie alle Kommunikationsverbindungen verbindungsorientiert ablaufen, d.h. eine Fälschung des Adressaten oder des Absenders automatisch zu keinen Verbindungen führt.

Auf den Schritt der Erfassung des Alarmzustandes aufgrund der Übertragung der die dezentrale Alarmerfassungseinheit eindeutig identifizierenden Information, vorzugsweise der Rufnummer der dezentralen Alarmerfassungseinheit, folgt der Schritt des Aufbauens einer Verbindung über den Nachrichten-/Daten-Kanal des digitalen Datennetzes, falls dieser Kanal frei ist. Dieses Vorgehen entspricht dem Aufbau einer "normalen" Telefonverbindung, d.h. bei freiem B-Kanal des ISDN-Netzes wird die Standard-Signalisierung eines ISDN-Anrufs durchgeführt. Es kann nun beispielsweise die Situation auftreten, daß der Nachrichten-/Daten-Kanal des Anschlusses der Alarmzentrale an das ISDN-Netz aufgrund sehr vieler gleichzeitig einlaufender Alarmmeldungen von verschiedenen Alarmerfassungseinheiten belegt ist. Ein derartiger Ausnahmefall kann beispielsweise bei einem Gewitter auftreten, bei dem gleichzeitig eine Vielzahl von Alarmerfassungseinrichtungen zur Überwachung von Häusern fälschlich eine Einbruchsstiuation erfassen. Sind bei einem derartigen Naturereignis durch die große Anzahl von annähernd gleichzeitig einlaufenden Alarmen bereits die B-Kanäle belegt, so wird lediglich der Anruf quittiert und abgelehnt, wobei jedoch die Rufnummer der jeweiligen Alarmerfassungseinheiten, also die Rufnummern-Identifikation bzw. die Calling Party Number in der Alarmzentrale gespeichert wird. An diesem Beispielfall wird deutlich, daß das erfindungsgemäße Verfahren eine zuverlässigere Alarmierung gewährleistet verglichen mit der herkömmlichen, verbindungsorientierten Alarmierung, die nur bei Verwendung einer sehr großen Anzahl von Nutzkanälen, die im wesentlichen der Zahl der möglichen Alarmquellen entspricht, den gleichen Alarmierungseffekt erreicht, wobei jedoch ein erheblicher technischer Mehraufwand und damit entsprechende Mehrkosten erforderlich sind.

Bei dem erfindungsgemäßen Verfahren können die einlaufenden Alarmmeldungen zur kartographischen Lageanzeige des Alarmortes verwendet werden, so daß geschultes Personal beispielsweise durch ein Gewitter bedingte Fehlalarme von echten Alarmen unterscheiden kann.

Sobald ein Nachrichten-/Daten-Kanal von der Alarmzentrale über das digitale Netz zu der Alarmerfassungseinheit frei ist, kann das Personal in der Alarmzentrale beispielweise eine Audio-Video-Verbindung über das digitale Netz schalten und das Objekt überprüfen. Auch bei dieser Kontaktaufnahme der Alarmzentrale mit der dezentralen Alarmerfassungseinheit kann die dezentrale Alarmerfassungseinheit aufgrund der Rufnummer der Alarmzentrale diese erkennen und im Alarmfall jeden anderen Anruf mit Ausnahme des Anrufs der Alarmzentrale zurückweisen, damit keine Blockade der Leitung auftreten kann.

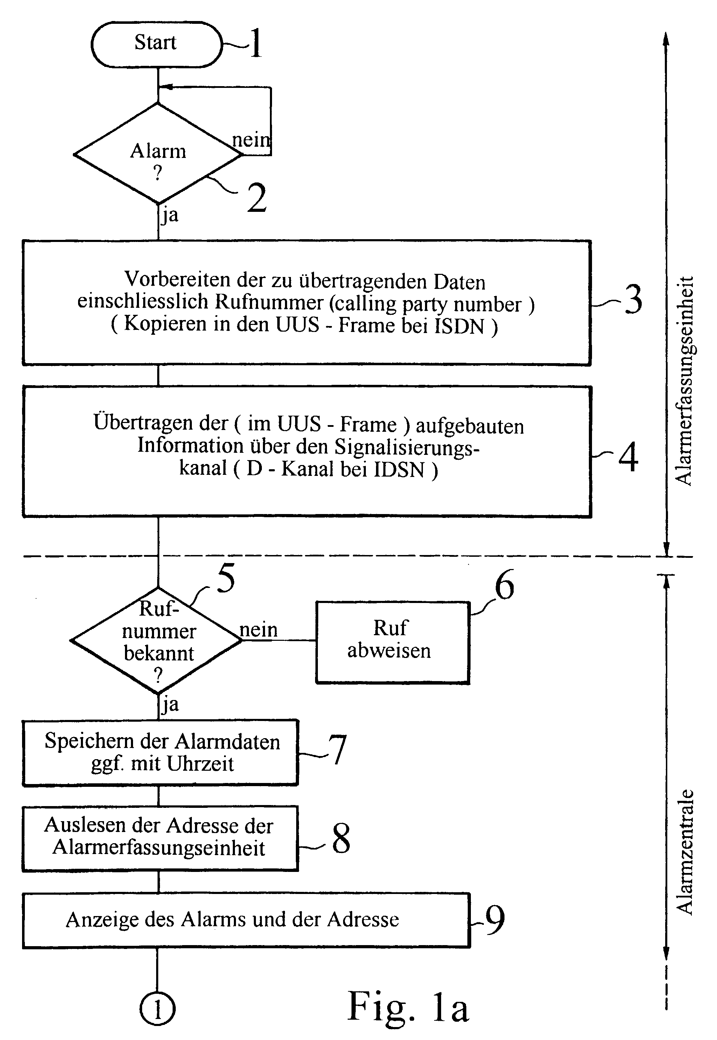

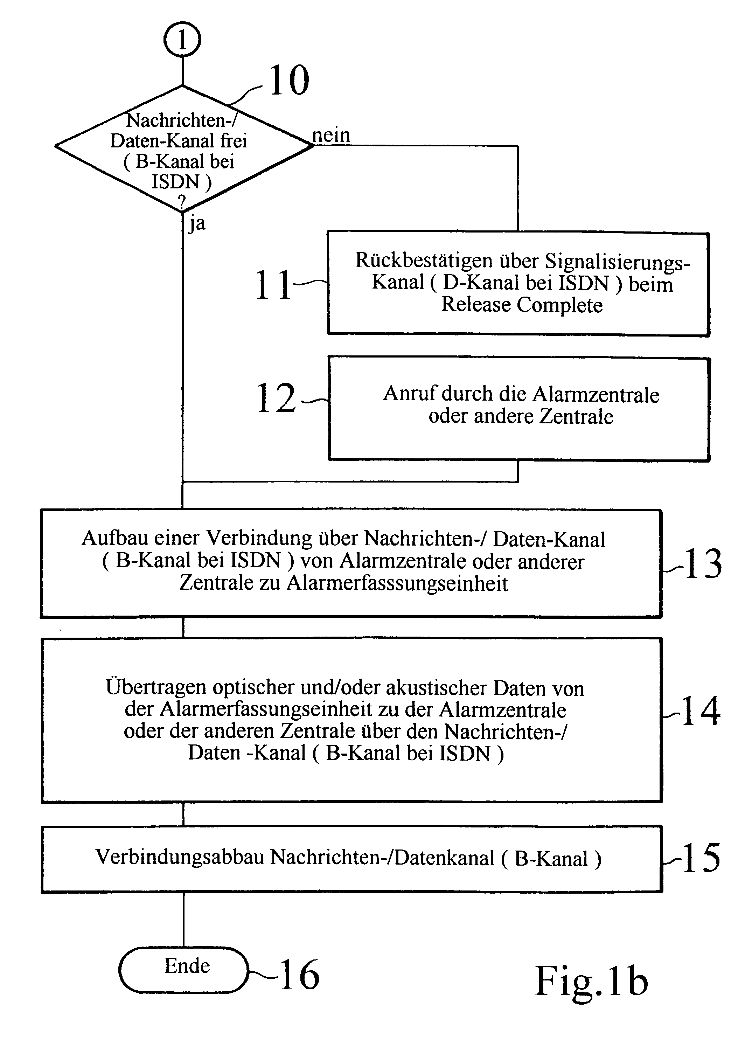

Ein bevorzugtes Ausführungsbeispiel des erfindungsgemäßen Verfahrens wird nachfolgend unter Bezugnahme auf die einzige Figur näher erläutert. Es zeigt:

Die einzige Figur ein Flußdiagramm eines Ausführungsbeispiels des erfindungsgemäßen Verfahrens bei Anwendung auf das ISDN-Netz.

Die nachfolgende Beschreibung des bevorzugten Ausführungsbeispiels des Verfahrens bezieht sich auf dessen Anwendung im Falle des ISDN-Netzes als digitales Datennetz. Jegliches digitale Datennetz, das über einen Signalsierungskanal bzw. Steuerkanal und einen Nachrichten-/Daten-Kanal verfügt, kann anstelle des ISDN-Netzes verwendet werden.

Nach dem Start des Verfahrens bei einem ersten Schritt 1 führt eine Alarmerfassungseinheit bei einem Schritt 2 die Überprüfung durch, ob ein Alarm vorliegt. Bei der Alarmerfassungseinheit kann es sich um einen PC am Ort des zu überwachenden Objekts handeln, der mit einer Mehrzahl von Alarmsensoren versehen ist und an das ISDN-Netz angeschlossen ist. Falls die Alarmerfassungseinheit bei dem Schritt 2 das Auftreten dieses Alarms feststellt, schreitet das Programm zum Schritt 3 fort. Hier bereitet die Alarmerfassungseinheit die zu übertragenden Daten einschließlich der Rufnummer (Calling Party Number) vor und kopiert diese Daten in den UUS-Frame, also das Feld für die Datenübertragung von Anwender zu Anwender über den Signalisierungskanal. Bei den zu übertragenden Daten kann es sich neben der Rufnummer der Alarmerfassungseinheit beispielsweise um eine Charakterisierung der Alarmart, wie beispielsweise das Ansprechen eines Glasbruchsensors, das Ansprechen eines Feuersensors oder dergleichen handeln.

Bei dem darauffolgenden Schritt 4 wird die im UUS-Frame aufgebaute Information von der Alarmerfassungseinheit über den Signalisierungskanal bzw. D-Kanal des ISDN-Netzes zu einer Alarmzentrale übertragen.

Ab dem nunmehr folgenden Verfahrensschritt 5 wird der Verfahrensablauf durch die Alarmzentrale gesteuert.

Bei dem Schritt 5 überprüft die Alarmzentrale, ob die über den Signalisierungskanal übermittelte Rufnummer der Alarmerfassungseinheit bekannt ist, also beispielsweise in einer Tabelle der Rufnummer von Teilnehmern an dem Alarmsystem enthalten ist. Falls dies nicht der Fall ist, schreitet das Verfahren mit dem Schritt 6 fort, bei dem der Ruf abgewiesen wird. Falls die Überprüfung bei dem Schritt 5 ergibt, daß die Rufnummer der Alarmerfassungseinheit eine der in einer Tabelle der Alarmzentrale enthaltenen Rufnummern ist, so fährt das Verfahren bei dem Schritt 7 fort, bei dem die Alarmdaten, nämlich zumindest die Rufnummer der anrufenden Alarmerfassungseinheit, gegebenenfalls die übertragene Alarmart und beispielsweise die momentane Uhrzeit gespeichert werden.

Bei dem folgenden Schritt 8 werden Details des überwachten Objektes, wie beispielsweise die Adresse des Objekts, ausgelesen und bei dem darauffolgenden Schritt 9 als Alarmanzeige verbunden mit der Adresse für das Personal in der Alarmzentrale zur Anzeige gebracht. Die Alarmauslösung erfolgt also bereits vor dem nachfolgend beschriebenen Zustandekommen einer Verbindung mit Zugriff auf den Nachrichten-/Daten-Kanal.

Bei dem folgenden Schritt 10 überprüft die Alarmzentrale, ob der Nachrichten-/Daten-Kanal bzw. B-Kanal ihres Anschlusses an das ISDN-Netz frei ist. Falls dies der Fall ist, fährt das Verfahren mit dem Schritt 13 fort. Andernfalls schreitet das Verfahren mit dem Schritt 11 fort, bei dem die Alarmzentrale über den Signalisierungskanal bzw. D-Kanal des ISDN-Netzes bei dem sogenannten "Release-Complete", also der Abbruchprozedur für den nicht zustandegekommenen Verbindungsaufbau über den Signalisierungskanal den Erhalt der Alarmmeldung rückbestätigt. Im einzelne kann dieser Schritt 11 wiederum die Vorbereitung der rückzuübertragenden Daten, nämlich der Rückbestätigung, das Kopieren der rückzuübertragenden Daten in den UUS-Frame bei ISDN und das nachfolgende Übertragen der UUS-Frameseiten der Alarmzentrale aufgebauten Information über den Signalisierungskanal umfassen.

Nachdem einige Zeit verstrichen ist, versucht die Alarmzentrale oder gegebenfalls eine andere, mit der Alarmzentrale über ein Netzwerk verbundene Zentrale einen Anruf bei der Alarmerfassungseinheit, um eine Verbindung über den Nachrichten-/Daten-Kanal bzw. B-Kanal aufzubauen.

Bei dem nächsten Verfahrensschritt 13 erfolgt ein Aufbau einer Verbindung über den Nachrichten-/Daten-Kanal bzw. B-Kanal im Falle des ISDN-Netzes von der Alarmzentrale oder der genannten anderen Zentrale zu der Alarmerfassungseinheit. Nach Aufbau dieser Verbindung werden bei dem folgenden Verfahrensschritt 14 optische und/oder akutische Daten von der Alarmerfassungseinheit zu der Alarmzentrale oder zu der genannten anderen Zentrale über den Nachrichten-/Daten-Kanal bzw. B-Kanal übertragen, um die Ursache für den Alarm zu überprüfen und um das Personal in der Alarmzentrale in die Lage zu versetzen, geeignete weitere Maßnahmen zu ergreifen, um also beispielsweise die Polizei, Feuerwehr, Rettungsdienste etc. zu verständigen. Insbesondere kann bei dem Verfahrensschritt 14 eine Audio-Video-Verbindung zwischen der Alarmerfassungseinheit und der Alarmzentrale aufgebaut werden. Bei dem folgenden Verfahrensschritt 15 wird der Verbindungsaufbau des Nachrichten-/Daten-Kanals bzw. B-Kanal bei ISDN abgebaut und somit die Verbindung beendet. Bei dem folgenden Verfahrensschritt 16 endet das Verfahren.

Die Schritte 3 bis 15 des beschriebenen Verfahrensablaufs werden vorzugsweise sooft wiederholt, bis das Auftreten des Alarms von der Alarmerfassungseinheit an die Alarmzentrale übermittelt wurde und die Alarmzentrale die Übermittlung des Alarms entweder durch Rückbestätigung über den Signalisierungskanal beim Schritt 11 oder durch Verbindungsaufbau über den Nachrichten-/Daten-Kanal beim Schritt 13 bestätigte.

## Patentansprüche

1. Verfahren zum Überwachen eines Objektes mit einer dem Objekt zugeordneten dezentralen Erfassungseinheit und mit einer Alarmzentrale, welche über ein digitales Datennetz mit einem Signalisierungskanal und einem Nachrichten-/Daten-Kanal miteinander verbunden sind, mit folgenden Verfahrensschritten:
- bei Erfassen (1) eines Alarms, Übertragen (4) einer Rufnummer der dezentralen Alarmerfassungseinheit von dieser über den Signalisierungskanal des digitalen Netzes zu der Alarmzentrale;
- Prüfen (5), ob die über den Signalisierungskanal übertragene Rufnummer der Alarmerfassungseinheit eine einer Mehrzahl von in der Alarmzentrale abgespeicherten Rufnummern ist;
-- falls dies nicht der Fall ist, Abweisen (6) des Rufes; und
-- falls dies der Fall ist, Fortfahren mit dem Verfahrensschritt des Speicherns (7) der Rufnummer der dezentralen Alarmerfassungseinheit durch die Alarmzentrale und Erzeugen (9) eines die Alarmerfassungseinheit angebenden Alarms; und
- falls der Nachrichten-/Daten-Kanal des digitalen Datennetzes frei ist, Aufbauen (13) einer Verbindung zwischen der Alarmzentrale und der Alarmerfassungseinheit.

2. Verfahren nach Anspruch 1, bei dem
das digitale Netz das ISDN-Netz ist;
der Signalisierungskanal der D-Kanal des ISDN-Netzes ist; und
der Nachrichten-/Daten-Kanal der B-Kanal des ISDN-Netzes ist.

3. Verfahren nach Anspruch 1 oder 2, mit folgenden zusätzlichen Verfahrensschritten nach dem Verfahrensschritt des Erzeugens (9) der die Alarmerfassungseinheit angebenden Alarmanzeige:
Prüfen (10), ob der Nachrichten-/Daten-Kanal frei ist;
falls dies der Fall ist, Fortfahren mit dem Verfahrensschritt des Aufbauens (13) der Verbindung über den Nachrichten-/Daten-Kanal von der Alarmzentrale zu der Alarmerfassungseinheit;
anderenfalls Rückbestätigen (11) des Erhalts der Alarminformation über den Signalisierungskanal.

4. Verfahren nach einem der Ansprüche 1 bis 3, mit folgendem weiteren Verfahrensschritt nach dem Verfahrensschritt (13) des Aufbauens einer Verbindung über den Nachrichten-/Daten-Kanal zwischen der Alarmzentrale und der Alarmerfassungseinheit:
Übertragen (14) von optischen und/oder akustischen Daten von der Alarmerfassungsseinheit zu der Alarmzentrale über den Nachrichten-/Daten-Kanal.

## Claims

1. Method for monitoring an object with a remote alarm registration unit which is assigned to the object and with an alarm centre, the unit and the centre being connected via a digital data network having a signalling channel and a message/data channel, comprising the following method steps:
- transmitting (4) a call number of the remote alarm registration unit from this to the alarm centre over the signalling channel of the digital network when registering (1) an alarm;
- checking (5) whether the call number of the alarm registration unit transmitted over the signalling channel is one of a multiplicity of call numbers stored in the alarm centre;
-- rejecting (6) the call if this is not the case; and
-- continuing with the method step of storing (7) the call number of the remote alarm registration unit under the control of the alarm centre and generating (9) an alarm indicating the alarm registration unit if this is the case; and
- setting up (13) a connection between the alarm centre and the alarm registration unit if the message/data channel of the digital data network is idle.

2. Method according to claim 1, wherein
the digital network is the ISDN network;
the signalling channel is the D-channel of the ISDN network; and
the message/data channel is the B-channel of the ISDN network.

3. Method according to claim 1 or 2, comprising the following additional method steps after the method step of generating (9) the alarm display indicating the alarm registration unit:
checking (10) whether the message/data channel is idle;
continuing with the method step of setting up (13) the connection over the message/data channel from the alarm centre to the alarm registration unit if this is the case;
confirming (11) receipt of the alarm information, back over the signalling channel, otherwise.

4. Method according to one of the claims 1 to 3, comprising the following additional method step after the method step (13) of setting up a connection over the message/data channel between the alarm centre and the alarm registration unit:
transmitting (14) optical and/or acoustic data from the alarm registration unit to the alarm centre over the message/data channel.

## Revendications

1. Procédé de surveillance d'un objet au moyen d'une unité de détection décentralisée, associée à l'objet, et d'une centrale d'alarmes qui sont reliées entre elles au moyen d'un réseau numérique de données à canal de signalisation et à canal d'informations/de données, caractérisé en ce qu'il comprend les étapes consistant à:
- lors de la détection (1) d'une alarme, transmettre (4) à la centrale d'alarmes, à partir de l'unité décentralisée de détection d'alarmes, un numéro d'appel de cette unité par le canal de signalisation du réseau numérique;
- vérifier (5) si le numéro d'appel de l'unité de détection d'alarmes, transmis par le canal de signalisation, est l'un des numéros d'une série de numéros d'appel mémorisés dans la centrale d'alarmes
-- si tel n'est pas le cas, refuser (6) l'appel; et
-- si tel est le cas, poursuivre par l'étape de procédé consistant à faire mémoriser (7) par la centrale d'alarmes le numéro d'appel de l'unité décentralisée de détection d'alarmes et faire engendrer (9) une alarme indiquant l'unité de détection d'alarmes;
- dans le cas où le canal d'informations/de données du réseau numérique de données est libre, établir (13) une connexion entre la centrale d'alarmes et l'unité de détection d'alarmes.

2. Procédé selon la revendication 1, dans lequel
le réseau numérique est le réseau ISDN;
le canal de signalisation est le canal D du réseau ISDN; et
le canal d'informations/de données est le canal B du réseau ISDN.

3. Procédé selon la revendication 1 ou 2, comprenant, après l'étape de génération (9) de l'affichage d'alarme indiquant l'unité de détection d'alarmes, les étapes consistant à:
vérifier (10) si le canal d'information/de données est libre;
si tel est le cas, poursuivre par l'étape de procédé consistant à établir (13) la connexion entre la centrale d'alarmes et l'unité de détection d'alarmes par le canal d'informations/de données;
dans le cas contraire, accuser, par le canal de signalisation, réception (11) de l'informations d'alarmes.

4. Procédé selon l'une des revendications 1 à 3, comprenant après l'étape (13) de procédé consistant à établir une connexion entre la centrale d'alarmes et l'unité de détection d'alarmes par le canal d'informations/de données, l'étape additionnelle de procédé consistant à:
transmettre (14), de l'unité de détection d'alarmes à la centrale d'alarmes, des données optiques et/ou acoustiques par le canal d'informations/de données.
